# EUROPEAN PATENT APPLICATION

(11) **EP 4 134 809 A1**
(43) Date of publication of application: **15.02.2023**
(21) Application number: 20929799.3
(22) Date of filing: 11.05.2020
(51) Int. Cl.: G06F 3/16, G06F 3/0488, G06F 3/041, G06F 3/038

(54) **VIRTUAL OR AUGMENTED REALITY TEXT INPUT METHOD AND SYSTEM, AND STORAGE MEDIUM**

(30) Priority: 07.04.2020 CN 202010266594
(71) Applicant: JRD Communication (Shenzhen) Ltd, Shenzhen, Guangdong 518052 (CN)
(72) Inventor: BAO, Zhuijun, Shenzhen, Guangdong 518052 (CN)
(74) Representative: V.O.
(86) International application number: PCT/CN2020/089593
(87) International publication number: WO 2021/203511

(57) **Abstract**

A virtual or augmented reality text input method and system, and a storage medium. An inertial measurement instrument is used to simulate an air mouse so as to move a cursor on a virtual interface, and text content is inputted into a text input box of the virtual interface by means of voice input so as to solve the problem in which operation is tedious and time-consuming, which is caused by a virtual or augmented reality device operating a virtual keyboard by using direction buttons on a handle so as to input text, thus facilitating users and improving user experience.

## Description

The present application claims priority Chinese Patent Application No. 202010266594.6, titled "VIRTUAL OR AUGMENTED REALITY TEXT INPUT METHOD, SYSTEM AND STORAGE MEDIUM," filed on April 07, 2020 with the China National Intellectual Property Administration, which is incorporated by reference in the present application in its entirety.

### FIELD OF INVENTION

The invention relates to the field of mobile communication technology, and particularly to a virtual or augmented reality text input method, system and storage medium.

### BACKGROUND

Virtual or augmented reality head-mounted devices have proven to be very valuable in many applications, especially in the field of personal entertainment systems. Wearing a virtual or augmented reality head-mounted device can be the beginning of an exciting experience, which is more immersive than other digital entertainment or analog experiences. However unfortunately, when wearing virtual or augmented reality head-mounted devices, the user's interaction efficiency is low, especially in certain input interactions (for example inputting text in a specific text input box), a common practice is to use a handle to control a cursor to move to the text input box, and then the system will pop up a virtual keyboard, and then use the handle to difficultly input the corresponding texts.

When inputting, the user uses the direction buttons "up, down, left, and right" on a simple handle to operate the cursor, move to the position that needs to be input, press the confirm button to call out the virtual keyboard, and then use the direction keys on the handle to select and complete the input. This operation is very inconvenient and slow.

Therefore, the present application provides a virtual or augmented reality text input method, system, and storage medium to solve the above-mentioned problems.

### SUMMARY

### TECHNICAL PROBLEM

The embodiments of the present application provide a virtual or augmented reality text input method, system, and storage medium, which solve the problem of cumbersome operation and time-consuming operation caused by the virtual or augmented reality device operating the virtual keyboard through the direction keys on a handle for text input.

### TECHNICAL SOLUTION

According to a first aspect of the present application, an embodiment of the present application provides a virtual or augmented reality text input method applied to a virtual or augmented reality text input system including a first device and a second device communicating with the first device, wherein the virtual or augmented reality text input method comprises: moving a cursor in a virtual interface to a control through an inertial measuring instrument, wherein the inertial measuring instrument is set in the second device, and the virtual interface is displayed in the first device; detecting whether there is a pressing event by the second device; initiating voice listening through the first device and receiving an input voice content when a pressing event is detected; and recognizing the voice content by the first device after the pressing event ends and obtaining a recognition result.

Furthermore, when the pressing event is detected, the step of initiating voice listening through the first device and receiving the input voice content comprises detecting whether the control pointed by the cursor in the virtual interface allows the input of text content; and initiating voice listening and receiving the input voice content when the control allows the input of text content is detected.

Furthermore, after the step of initiating voice listening through the first device and receiving the input voice content when the pressing event is detected, the method further comprises judging whether the pressing event satisfies a preset condition; and when the pressing event is determined to satisfy the preset condition, the voice content is recognized to obtain a recognition result after the pressing event ends.

Furthermore, the preset conditions comprises a duration of the pressing event reaches a preset time.

Furthermore, after the pressing event ends, the step of recognizing the voice content in the first device and obtaining the recognition result comprises performing voice recognition on the voice content to obtain a text content corresponding to the voice content.

According to a second aspect of the present application, an embodiment of the present application provides a virtual or augmented reality text input system including a first device and a second device communicating with the first device, wherein the system comprises a cursor moving module configured to move a cursor in a virtual interface to a control through an inertial measuring instrument, wherein the inertial measuring instrument is set in the second device, and the virtual interface is displayed in the first device; an event detecting module configured to detect whether there is a pressing event through the second device; a voice inputting module configured to initiate a voice listening function through the first device when a pressing event is detected and receive the input voice content; and a condition judging module configured to judge whether the pressing event meets a preset condition.

Furthermore, the voice inputting module comprises a detecting unit configured to detect whether the control pointed by the cursor in the virtual interface allows input of text content.

Furthermore, the system further comprises a condition judging module configured to judge whether the pressing event meets a preset condition.

Furthermore, the voice recognition module comprises a voice recognizing module configured to recognize the voice content through the first device after the pressing event ends and obtain a recognition result.

According to a third aspect of the present application, an embodiment of the present application provides a storage medium in which a plurality of instructions are stored in the storage medium, and the plurality of instructions are uploaded by a processor to execute following steps: moving a cursor in a virtual interface to a control through an inertial measuring instrument, wherein the inertial measuring instrument is set in the second device, and the virtual interface is displayed in the first device; detecting whether there is a pressing event by the second device; initiating voice listening through the first device and receiving an input voice content when a pressing event is detected; and recognizing the voice content by the first device after the pressing event ends and obtaining a recognition result.

Furthermore, when the pressing event is detected, the step of initiating voice listening through the first device and receiving the input voice content comprises detecting whether the control pointed by the cursor in the virtual interface allows the input of text content; and initiating voice listening and receiving the input voice content when the control allows the input of text content is detected.

Furthermore, after the step of initiating voice listening through the first device and receiving the input voice content when the pressing event is detected, the method further comprises judging whether the pressing event satisfies a preset condition; and when the pressing event is determined to satisfy the preset condition, the voice content is recognized to obtain a recognition result after the pressing event ends.

Furthermore, the preset conditions comprise a duration of the pressing event reaches a preset time.

Furthermore, after the pressing event ends, the step of recognizing the voice content in the first device and obtaining the recognition result comprises performing voice recognition on the voice content to obtain a text content corresponding to the voice content.

### BENEFICIAL EFFECT

Compared with the prior art, among the embodiments of the application provides a virtual or augmented reality text input method, system, and storage medium, a connection is established between a first device and a second device, and an inertial measuring instrument in the second device is used to simulate an air mouse to realize the cursor on the first device. The virtual interface is moved, and text content is entered in the text input box of the virtual interface through voice input to solve problems of the cumbersome and time-consuming operation of the virtual or augmented reality device operating the virtual keyboard through the direction buttons on the handle for text input to facilitate users and improve user experiences.

### BRIEF DESCRIPTION OF DRAWINGS

FIG. 1 is a schematic flowchart of steps of a virtual or augmented reality text input method provided by an embodiment of the application.
FIG. 2 is a schematic diagram of a scene interaction provided by an embodiment of the application.
FIG. 3 is a schematic flowchart of steps of another virtual or augmented reality text input method provided by an embodiment of the application.
FIG. 4 is a schematic structural diagram of a virtual or augmented reality text input system provided by an embodiment of the application.
FIG. 5 is a schematic diagram of a structure of a voice input module shown in FIG. 4.
FIG. 6 is a schematic diagram of a structure of a speech recognition module shown in FIG. 4.
FIG. 7 is a schematic structural diagram of a first device provided by an embodiment of the present application.

### DETAILED DESCRIPTION

The technical solutions in the embodiments of the present application will be clearly and completely described below in conjunction with the drawings in the embodiments of the present application. Obviously, the described embodiments are only a part of the embodiments of the present application, rather than all the embodiments. Based on the embodiments in this application, all other embodiments obtained by those skilled in the art without creative work shall fall within the protection scope of this application.

The terms "first", "second", "third", etc. (if any) in the description and claims of this application and the above-mentioned drawings are used to distinguish similar objects, and not necessarily used to describe a specific order or precedence. The objects described in this way can be interchanged under appropriate circumstances. In addition, the terms "including" and "having" and any variations of them are intended to cover non-exclusive inclusions.

In the specific embodiments, the drawings discussed below and various embodiments used to describe the principles disclosed in the present application are only for illustration, and should not be construed as limiting the scope of the disclosure of the present application. Those skilled in the art will understand that the principles of the present application can be implemented in any suitably arranged system. Exemplary embodiments will be described in detail, and examples of these embodiments are shown in the drawings. The same reference numerals in the drawings refer to the same elements.

The terms used in this specific embodiment are only used to describe specific embodiments and are not intended to show the concept of the present application. Unless there is a clearly different meaning in the context, the expression used in the singular form encompasses the expression in the plural form. In the specification of this application, terms such as "including", "having" and "containing" are intended to indicate the possibility of the features, numbers, steps, actions, or combinations thereof disclosed in the specification of this application, but not the possibility that one or more other features, numbers, steps, actions or combinations thereof may exist or may be added is excluded. The same reference numerals in the drawings refer to the same parts.

In the description of this application, it should be noted that the terms "installation", "connecting with each other", and "connection" should be understood in a broad sense, unless otherwise clearly specified and limited. For example, it can be a fixed connection or a detachable connection, connected or integrally connected. It can be mechanically connected, or electrically connected or can communicate with each other. It can be directly connected or indirectly connected through an intermediate medium. It can be the internal communication of two components or the interaction of two components relation. For those of ordinary skill in the art, the specific meanings of the above-mentioned terms in this application can be understood according to specific circumstances.

The following disclosure provides many different embodiments or examples for realizing different structures of the present application. To simplify the disclosure of the present application, the components and settings of specific examples are described below. Of course, they are only examples, and are not intended to limit the application. In addition, the present application may repeat reference numerals and/or reference letters in different examples, and this repetition is for the purpose of simplification and clarity and does not indicate the relationship between the various embodiments and/or settings discussed. In addition, this application provides examples of various specific processes and materials, but those of ordinary skill in the art may be aware of the application of other processes and/or the use of other materials.

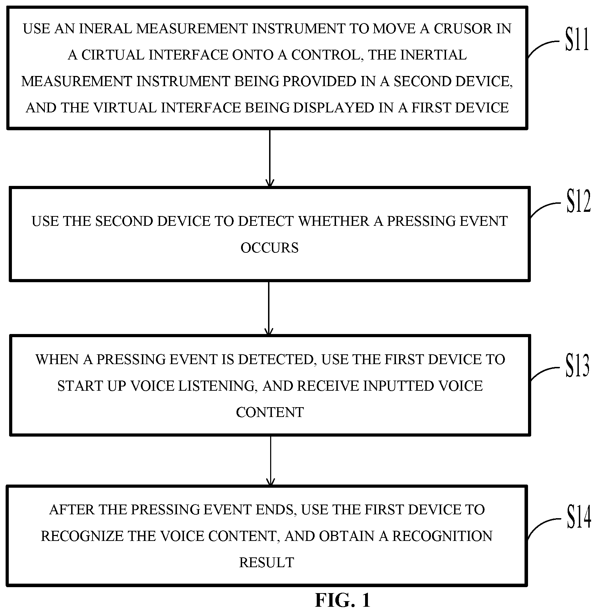

Specifically, please refer to FIG. 1, an embodiment of the present application provides a virtual or augmented reality text input method. The virtual or augmented reality text input method is applied to a virtual or augmented reality text input system, and the system includes a first device and a second device that communicates with the first device. The method includes following steps.

Step S11: moving a cursor in a virtual interface to a control through an inertial measuring instrument, wherein the inertial measuring instrument is set in the second device, and the virtual interface is displayed in the first device.

In an embodiment of the present application, the first device may be a virtual or augmented reality head-mounted device, and the second device may be a handheld smart handle. The first device and the second device generally communicate through a Bluetooth connection, and the communication operations mainly include Bluetooth pairing, reconnection after disconnection, connection retention, data transmission, etc. By processing the original data of the inertial measuring instrument in the handle with an algorithm, the handle can be simulated as an air mouse device, and up, down, left, and right movements are reported to a system of the head-mounted device via Bluetooth. A virtual or augmented reality android application can obtain left and right movement information through the system.

Step S12: detecting whether there is a pressing event by the second device.

In the embodiment of the present application, this step is mainly completed by a pressure touch input module in the second device. The pressure touch module can be composed of a touch panel and a pressure sensor. When a user presses a touchpad, the pressure sensor can obtain an intensity of the user's press. Through an event system of the second device, the user's pressing event is reported to the first device.

Step S13: initiating voice listening through the first device and receiving an input voice content when a pressing event is detected.

In an embodiment of the present application, when the user presses the touchpad to generate the pressing event, a voice interaction function of the first device is triggered, and the first device starts voice listening and receives the input voice content.

Step S14: recognizing the voice content by the first device after the pressing event ends and obtaining a recognition result.

In an embodiment of the present application, if the user continues to press the touchpad of the second device after triggering the voice interaction function of the first device, it will default that the user has not yet completed the voice input and continues to enable voice listening. When the second device detects an end of the pressing event, the second device determines that the user has completed the voice input, turns off voice listening, and performs a next step of recognition operation on the voice content that the user has input and obtains the recognition result.

In other embodiments, to save a power consumption of the second device, the second device may set an upper threshold, such as two minutes, for the duration of the pressing event. When the duration of the pressing event exceeds the upper threshold, it is considered that the pressing event belongs to the user's accidental touch, rather than the operation that the user wants to perform to trigger the voice interaction of the second device.

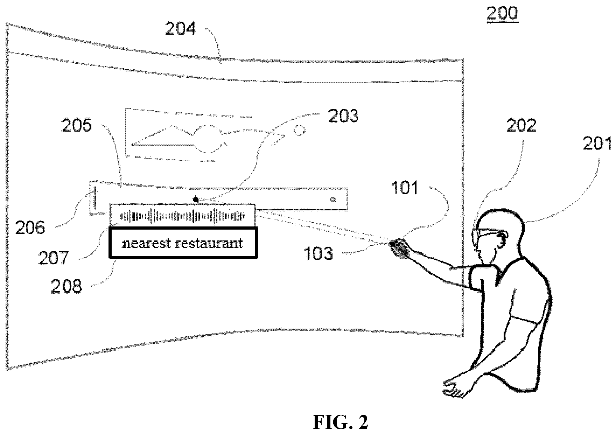

Referring to FIG. 2, an embodiment of the present application provides a schematic diagram of a scene interaction.

A user 201 puts on a head-mounted device 202, and the user 201 holds a smart handle 101 that has been paired with the head-mounted device 202 through a Bluetooth connection and moves the smart handle 101 in a virtual or augmented reality user interface (UI) 204 to control a pointing cursor 203 to a position of an input control 205. The user 201 presses a touch input module 103 of the smart handle 101. At this time, a voice input prompt animation 207 and a voice-to-text content result box 208 appear below the pointing cursor 203 of the handle. The user 201 performs a voice input and says "nearest restaurant", and the voice input prompt animation 207 continues to play animations, the voice-to-text content result box 208 displays the content "nearest restaurant" entered by the user in real-time, and the user 201 releases the touch input module 103 of the smart handle 101. If the user 201 controls the smart handle 101 to move the pointing cursor 203 to the speech-to-text content result box 208 and presses the touch input module 103 of the smart handle 101 within 2 seconds, the user 201 can modify the content being input, otherwise the content "nearest restaurant" of the speech-to-text result box of 208 is automatically filled into the input control 205, and a cursor 206 in the input control 205 moves to an end of the input content, indicating that the user 201 has completed the input.

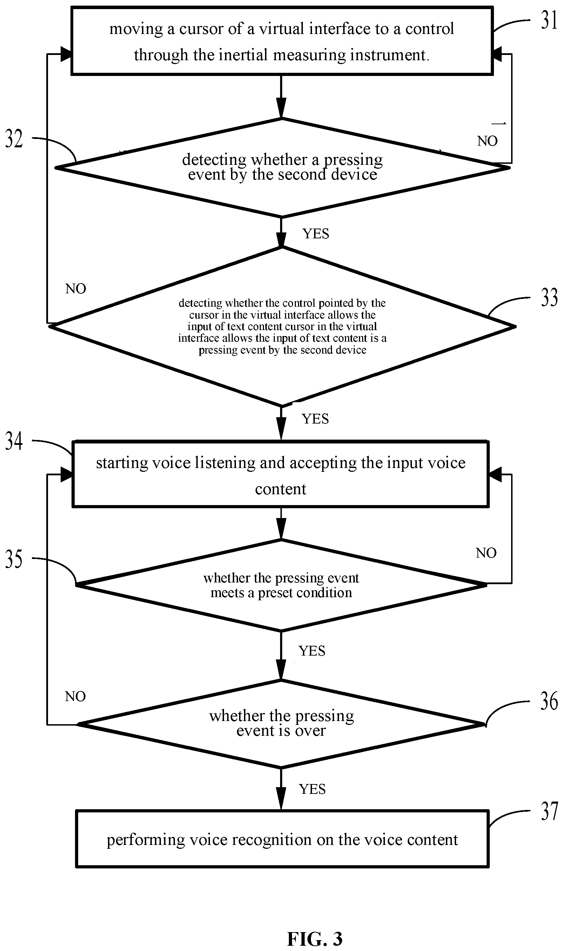

Please refer to FIG. 3, an embodiment of the present application provides another virtual or augmented reality text input method. The virtual or augmented reality text input method is applied to a virtual or augmented reality text input system. The system includes a first device and a second device that communicates with the first device. The method includes following steps.

Step S31: moving a cursor of a virtual interface to a control through the inertial measuring instrument.

In an embodiment of the present application, the inertial measuring instrument is only provided in the second device, and the virtual interface is displayed in the first device. The first device may be a virtual or augmented reality head-mounted device, and the second device may be a handheld smart handle. The first device and the second device generally communicate through a Bluetooth connection, and the communication operations mainly include Bluetooth pairing, reconnection after disconnection, connection retention, data transmission, etc. By processing the original data of the inertial measuring instrument in the handle with an algorithm, the handle can be simulated as an air mouse device, and up, down, left, and right movements are reported to a system of the head-mounted device via Bluetooth. A virtual or augmented reality android application can obtain left and right movement information through the system.

Step S32: detecting whether there is a pressing event by the second device. If yes, performing step S33, otherwise returning to step S31.

In an embodiment of the present application, this step is mainly completed by an pressure touch input module in the second device. The pressure touch module can be composed of a touchpad and a pressure sensor. When the user presses the touchpad, the pressure sensor can obtain an intensity of the user's pressing, and report the user's pressing event to the first device through an event system of the second device.

Step S33: detecting whether the control pointed by the cursor in the virtual interface allows the input of text content. If yes, performs step S34, otherwise returns to step S31.

Step S34, starting voice listening and accepting the input voice content.

In an embodiment of the present application, when the user presses the touchpad to generate a pressing event, an voice interaction function of the first device is triggered, and the first device starts the voice listening and receives the input voice content.

Step S35: whether the pressing event meets a preset condition. If yes, performing step S36, otherwise returning to step S34.

In an embodiment of the present application, to prevent the first device from misjudging a user's wrong touch operation as a trigger signal for the voice interaction, a preset condition may be set. If the pressing event meets the preset condition, the second device recognizes the pressing event as a trigger signal for the voice interaction and performs the next operation. If the pressing event does not meet the preset condition, the second device does not recognize the pressing event as a trigger signal for the voice interaction, and the next pressing event is continued to be detected.

In an embodiment, the preset condition may be set as a duration of the pressing event reaches the preset time, that is, a lower threshold is set for the duration of the pressing event. When the time for the user to press the touchpad of the second device exceeds the lower threshold, the first device will confirm that the user needs to use the voice interaction.

Step S36: whether the pressing event is over. If yes, preforming step S37, otherwise returning to step S34.

In an embodiment of the present application, if the user continues to press the touchpad of the second device after triggering the voice interaction of the first device, it will default that the user has not yet completed the voice input, and the voice listening is continuously turned on. When the second device detects that the pressing event ends, the second device determines that the user has completed the voice input and turns off voice listening.

Step S37: performing voice recognition on the voice content.

In an embodiment of the present application, when the pressing event ends, the first device defaults that the user has completed voice input, turns off voice listening, and performs voice recognition on the voice content input by the user to obtain the text content corresponding to the voice content. This step sets a timeout period, for example 2 seconds. Within this timeout period, it is detected whether the cursor has moved into the voice conversion result text box. If the cursor is in the voice conversion result text box, enter an modification mode and return to step S31 for performing the voice input, otherwise, ends the process.

In one embodiment, the voice recognition process can be completed by an offline voice recognition model local to the first device. In another embodiments, the voice recognition process can also be completed by a cloud voice recognition server.

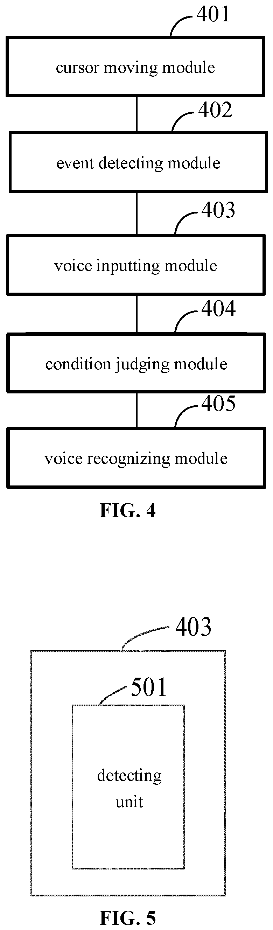

]Referring to FIG. 4, an embodiment of the present application provides a virtual or augmented reality text input system. The system includes a first device and a second device that communicates with the first device. The virtual or augmented reality text input system includes a cursor moving module 401, an event detecting module 402, a voice inputting module 403, a condition judging module 404, and a voice recognizing module 405.

The cursor moving module 401 is configured to move a cursor in a virtual interface to a control through an inertial measuring instrument. Herein the inertial measuring instrument is set in the second device, and the virtual interface is displayed in the first device.

In an embodiment of the present application, the first device may be a virtual or augmented reality head-mounted device, and the second device may be a handheld smart handle. The first device and the second device generally communicate through a Bluetooth connection, and the communication operations mainly include Bluetooth pairing, reconnection after disconnection, connection retention, data transmission, etc. By processing the original data of the inertial measuring instrument in the handle with an algorithm, the handle can be simulated as an air mouse device, and up, down, left, and right movements are reported to a system of the head-mounted device via Bluetooth. A virtual or augmented reality android application can obtain left and right movement information through the system.

The event detecting module 402 is configured to detect whether there is a pressing event through the second device.

In an embodiment of the present application, this step is mainly completed by the pressure touch input module in the second device. The pressure touch module can be composed of a touch panel and a pressure sensor. When the user presses the touch pad, the pressure sensor can obtain the intensity of the user's press. Through the event system of the second device, the user press event is reported to the first device.

A voice inputting module 403 is configured to initiate a voice listening function through the first device when a pressing event is detected and receive the input voice content. Referring to FIG. 5, the voice inputting module 403 includes a detecting unit 501, which is configured to detect whether the control pointed by the cursor in the virtual interface allows the input of text content.

In an embodiment of the present application, when the user presses the touchpad to generate a pressing event, the voice interaction function of the first device is triggered, the first device starts voice listening, and receives the input voice content.

The condition judging module 404 is configured to judge whether the pressing event meets a preset condition.

In the embodiment of the present application, in order to prevent the first device from misjudging the user's wrong touch operation as a trigger signal for voice interaction, a preset condition may be set. If the pressing event meets the preset condition, the second device recognizes the pressing event as a trigger signal for voice interaction and performs the next operation. If the pressing event does not meet the preset condition, the second device does not recognize the pressing event as a trigger signal for voice interaction, and the next pressing event is continued to be detected.

In one embodiment, the preset condition may be set as the duration of the pressing event reaches the preset time, that is, a lower threshold is set for the duration of the pressing event. When the time for the user to press the touchpad of the second device exceeds the lower threshold, the first device will confirm that the user needs to use voice interaction.

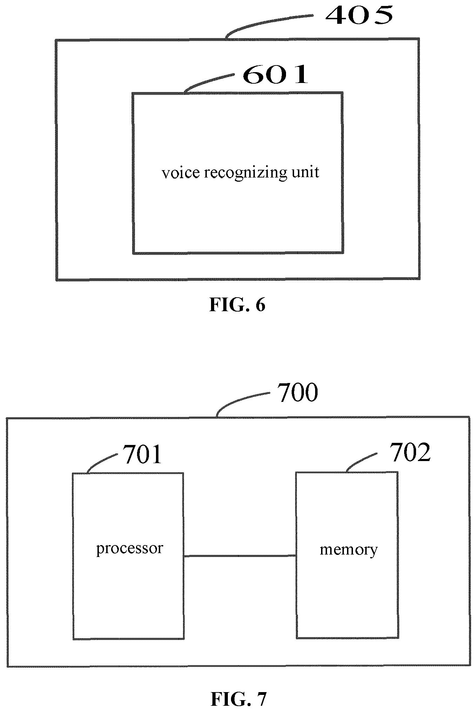

A voice recognizing module 405 is configured to recognize the voice content through the first device after the pressing event ends and obtain a recognition result. Referring to FIG. 6, the voice recognizing module 405 includes a voice recognizing unit 601, and the voice recognizing unit is used to perform voice recognition on the voice content to obtain text content corresponding to the voice content.

In the embodiment of the present application, if the user continues to press the touchpad of the second device after triggering the voice interaction function of the first device, it will default that the user has not yet completed the voice input and continues to enable voice listening. When the second device detects the end of the pressing event, the second device determines that the user has completed the voice input, turns off voice listening, and performs the next step of recognition operation on the voice content that the user has input and obtains the recognition result. Set a timeout period, for example 2 seconds. Within this timeout period, check whether the cursor moves into the voice conversion result text box. If the cursor is in the voice conversion result text box, enter the modification mode.

In other embodiments, to save the power consumption of the second device, the second device may set an upper threshold for the duration of the pressing event, such as two minutes. When the duration of the pressing event exceeds the upper threshold, it is considered that the pressing event belongs to the user's accidental touch, rather than the operation that the user wants to perform to trigger the voice interaction of the second device.

Referring to FIG. 7, an embodiment of the present application further provides a first device 700. The first device 700 may be a mobile phone, a tablet, a computer, or other devices. As shown in FIG. 7, the first device 700 includes a processor 701 and a memory 702. Herein, the processor 701 and the memory 702 are electrically connected.

The processor 701 is the control center of the first device 700, which uses various interfaces and lines to connect various parts of the entire first device, and by running or loading application programs stored in the memory 702, and calling data stored in the memory 702, various functions of the first device and process data can be performed to monitor the first device.

In this embodiment, the first device 700 is provided with multiple storage partitions, and the multiple storage partitions include a system partition and a target partition. The processor 701 in the first device 700 will perform the following steps to convert one or more instructions corresponding to the process of the application program are loaded into the memory 702, and the processor 701 runs the application program stored in the memory 702, thereby realizing various functions.

The cursor in the virtual interface is moved to a control by using an inertial measuring instrument. Herein the inertial measuring instrument is set in the second device, and the virtual interface is displayed in the first device.

Detecting whether there is a pressing event by the second device.

When a pressing event is detected, start voice listening through the first device, and receive the input voice content; and
after the pressing event ends, the voice content is recognized by the first device, and a recognition result is obtained.

Those of ordinary skill in the art can understand that all or part of the steps in the various methods of the foregoing embodiments can be completed by instructions, or by instructions to control related hardware, and the instructions can be stored in a computer-readable storage medium and is loaded and executed by the processor. To this end, an embodiment of the present application provides a storage medium in which multiple instructions are stored, and the instructions can be loaded by a processor to execute any of the virtual or augmented reality text input methods provided in the embodiments of the present application.

Herein, the storage medium may include a read-only memory (ROM), a random-access memory (RAM), a disk or a CD, etc.

Since the instructions stored in the storage medium can execute the steps in any virtual or augmented reality text input method provided in the embodiments of this application, any virtual or augmented reality text input method provided in the embodiments of this application can be implemented. For the beneficial effects that can be achieved by the actual text input method, see the previous embodiment for details, and will not be repeated here. For the specific implementation of the above operations, please refer to the previous embodiments, which will not be repeated here.

Embodiments of the application provides a virtual or augmented reality text input method, system, and storage medium. A connection is established between a first device and a second device, and an inertial measuring instrument in the second device is used to simulate an air mouse to realize the cursor on the first device. The virtual interface is moved, and text content is entered in the text input box of the virtual interface through voice input to solve problems of the cumbersome and time-consuming operation of the virtual or augmented reality device operating the virtual keyboard through the direction buttons on the handle for text input to facilitate users and improve user experiences.

In the above-mentioned embodiments, the description of each embodiment has its own emphasis. For parts that are not described in detail in an embodiment, reference may be made to related descriptions of other embodiments.

The above describes in detail a virtual or augmented reality text input method, system, and storage medium provided by the embodiments of the present application. Specific examples are used in this article to illustrate the principles and implementations of the present application. The description of the above embodiments It is only used to help understand the technical solutions and core ideas of the application; those of ordinary skill in the art should understand that they can still modify the technical solutions recorded in the foregoing embodiments, or equivalently replace some of the technical features; However, these modifications or replacements do not cause the essence of the corresponding technical solutions to deviate from the scope of the technical solutions of the embodiments of the present application.

## Claims

1. A virtual or augmented reality text input method applied to a virtual or augmented reality text input system including a first device and a second device communicating with the first device, wherein the virtual or augmented reality text input method comprises:
moving a cursor in a virtual interface to a control through an inertial measuring instrument, wherein the inertial measuring instrument is set in the second device, and the virtual interface is displayed in the first device;
detecting whether there is a pressing event by the second device;
initiating voice listening through the first device and receiving an input voice content when a pressing event is detected; and
recognizing the voice content by the first device after the pressing event ends and obtaining a recognition result.

2. The virtual or augmented reality text input method according to claim 1, wherein when the pressing event is detected, the step of initiating voice listening through the first device and receiving the input voice content comprises:
detecting whether the control pointed by the cursor in the virtual interface allows the input of text content; and
initiating voice listening and receiving the input voice content when the control allows the input of text content is detected.

3. The virtual or augmented reality text input method according to claim 1, wherein after the step of initiating voice listening through the first device and receiving the input voice content when the pressing event is detected, the method further comprises:
judging whether the pressing event satisfies a preset condition; and
when the pressing event is determined to satisfy the preset condition, the voice content is recognized to obtain a recognition result after the pressing event ends.

4. The virtual or augmented reality text input method according to claim 3, wherein the preset conditions comprise:
a duration of the pressing event reaches a preset time.

5. The virtual or augmented reality text input method according to claim 1, wherein after the pressing event ends, the step of recognizing the voice content in the first device and obtaining the recognition result comprises:
performing voice recognition on the voice content to obtain a text content corresponding to the voice content.

6. A virtual or augmented reality text input system including a first device and a second device communicating with the first device, wherein the system comprises:
a cursor moving module configured to move a cursor in a virtual interface to a control through an inertial measuring instrument, wherein the inertial measuring instrument is set in the second device, and the virtual interface is displayed in the first device;
an event detecting module configured to detect whether there is a pressing event through the second device;
a voice inputting module configured to initiate a voice listening function through the first device when a pressing event is detected and receive the input voice content; and
a condition judging module configured to judge whether the pressing event meets a preset condition.

7. The virtual or augmented reality text input system according to claim 6, wherein the voice inputting module comprises:
a detecting unit configured to detect whether the control pointed by the cursor in the virtual interface allows input of text content.

8. The virtual or augmented reality text input system according to claim 6, wherein the system further comprises:
a condition judging module configured to judge whether the pressing event meets a preset condition.

9. The virtual or augmented reality text input system according to claim 6, wherein the voice recognition module comprises:
a voice recognizing unit configured to recognize the voice content through the first device after the pressing event ends and obtain a recognition result.

10. A storage medium in which a plurality of instructions are stored in the storage medium, and the plurality of instructions are uploaded by a processor to execute following steps:
moving a cursor in a virtual interface to a control through an inertial measuring instrument, wherein the inertial measuring instrument is set in the second device, and the virtual interface is displayed in the first device;
detecting whether there is a pressing event by the second device;
initiating voice listening through the first device and receiving an input voice content when a pressing event is detected; and
recognizing the voice content by the first device after the pressing event ends and obtaining a recognition result.

11. The virtual or augmented reality text input method according to claim 10, wherein when the pressing event is detected, the step of initiating voice listening through the first device and receiving the input voice content comprises:
detecting whether the control pointed by the cursor in the virtual interface allows the input of text content; and
initiating voice listening and receiving the input voice content when the control allows the input of text content is detected.

12. The virtual or augmented reality text input method according to claim 10, wherein after the step of initiating voice listening through the first device and receiving the input voice content when the pressing event is detected, the method further comprises:
judging whether the pressing event satisfies a preset condition; and
when the pressing event is determined to satisfy the preset condition, the voice content is recognized to obtain a recognition result after the pressing event ends.

13. The virtual or augmented reality text input method according to claim 12, wherein the preset conditions comprise:
a duration of the pressing event reaches a preset time.

14. The virtual or augmented reality text input method according to claim 10, wherein after the pressing event ends, the step of recognizing the voice content in the first device and obtaining the recognition result comprises:
performing voice recognition on the voice content to obtain a text content corresponding to the voice content.
